# EUROPÄISCHE PATENTSCHRIFT

(11) **EP 0 868 499 B1**
(45) Veröffentlichungstag und Bekanntmachung des Hinweises auf die Patenterteilung: **22.12.1999**
(21) Anmeldenummer: 96934492.8
(22) Anmeldetag: 30.09.1996
(51) Int. Cl.: C09K 5/00

(54) **EIN KÜHLMEDIUM FÜR DEN EINSATZ BEI ERHÖHTEN BETRIEBSTEMPERATUREN**
A COOLANT FOR USE AT HIGH OPERATING TEMPERATURES
AGENT REFRIGERANT CONVENANT POUR L'UTILISATION A DES TEMPERATURES DE SERVICE ELEVEES

(30) Priorität: 13.10.1995 DE 19538246
(43) Veröffentlichungstag der Anmeldung: 07.10.1998
(73) Patentinhaber: BAYER AG, 51368 Leverkusen (DE)
(72) Erfinder: EL SAYED, Aziz, D-51375 Leverkusen (DE); JOACHIMI, Detlev, D-47800 Krefeld (DE); MEIER, Hartwig, D-51519 Odenthal (DE); IDEL, Karsten-Josef, D-47802 Krefeld (DE)
(86) Internationale Anmeldenummer: EP9604256
(87) Internationale Veröffentlichungsnummer: WO9714761

(56) Entgegenhaltungen:
- EP-A- 0 242 900
- EP-A- 0 361 252
- EP-A- 0 398 284
- US-A- 4 873 011

## Beschreibung

Weltweit wird hitzestabilisiertes, glasfaserverstärktes Polyamid (PA) 66 im KFZ-Kühlkreislauf mit Erfolg verwendet. Die wirtschaftliche und rationelle Herstellung von Kühlwasserkästen, Wasserrohren und Thermostatventilgehäusen neben hoher dynamischer Belastbarkeit und Beständigkeit gegen das Kühlmedium bei 108°C prädestiniert PA 66 für dieses Einsatzgebiet. Im Rahmen der Entwicklungsarbeiten zur Erhöhung des Wirkungsgrades von Verbrennungsmotoren wird mit höheren Temperaturbelastungen im Kühlmedium gerechnet. Die Anforderungen an die mechanischen Eigenschaften nach Kontakt mit dem Kühlmedium bei 130°C werden immer größer.

Als Kühlmedium wird im Automobilbereich eine Mischung aus Ethylenglykol:Wasser im Verhältnis 1:1 bezeichnet. Die Mischung erstarrt bei -30°C und siedet bei 108°C. Es handelt sich hier **nicht** um eine azeotrope Destillation. Zuerst destilliert das Wasser bei 108°C ab. Die Temperatur des Sudes nimmt mit steigendem Gehalt an Ethylenglykol zu, bis reines Glykol bei 197,4°C destilliert.

Steigt die Temperatur des Kühlmediums im geschlossenen Kühlkreissystem bis auf 130°C an, so steigt der Innendruck auf 2 bar. Mit dem Anstieg der Betriebstemperatur des Kühlmediums sind hohe mechanische Festigkeitswerte bei 130°C im mit Kühlmedium gesättigten Zustand neben sehr guter Dichtigkeit eine Voraussetzung für das Funktionieren des Kühlsystems. Entweicht ein Teil des Kühlmediums als Dampf, so steigt der Gehalt an Ethylenglykol im Kühlmedium an. Teile aus Polyamid können angelöst werden, wenn Glykolgehalt und Temperatur merklich ansteigen.

Aufgabe der vorliegenden Erfindung war es daher, ein Kühlmedium zu entwickeln, das bei den gewünschten Temperaturen (ca.130°C) ohne Druckanstieg arbeitet und die mechanischen Eigenschaften von Polyamid nicht merklich beeinträchtigt.

Gegenstand der Erfindung ist ein Kühlmedium bestehend aus
A) 35-65, vorzugsweise 45 bis 55 Gew.-% Polyethylenglykol einer mittleren Molmasse zwischen 285 und 420 g/mol,
B) 35-65, vorzugsweise 45 bis 55 Gew.-% Ethylenglykol sowie gegebenenfalls
C) Stabilisatoren.

Das Kühlmedium eignet sich zum Kühlen von Kraftfahrzeugmotoren.

Als Polyethylenglykol (A) der erfindungsgemäßen Mischung eignen sich Polyethylenglykole mit der Formel HO-(CH₂-CH₂-O)ₙ-H, mit einer Hydrolysezahl zwischen 271-315 und mit einer Dichte zwischen 1,12-1,15 g/cm³.

Als Ethylenglykol (B) der erfindungsgemäßen Mischung eignen sich technische Ethylenglykole mit der Formel HO-CH₂-CH₂-OH, einem Molgewicht von 60,05 g/mol und einer Dichte von 1,10 bis 1,13 g/cm³.

Als Stabilisator C) eignen sich Metalldesaktivatoren, Phosphite und Antioxidantien, wie sie üblicherweise bei der Stabilisierung eines Kühlmediums verwendet werden. Der Stabilisator wird üblicherweise in Mengen bis zu 2 Gew.-%, bezogen auf 100 Gew.-% Mischung aus A) und B), zugesetzt.

Überraschend wurde gefunden, daß auch glasfaserverstärktes PA 6 gegen dieses Kühlmedium bis 130°C beständig ist. Damit kann bei Verwendung des erfindungsgemäßen Kühlmediums PA 6 auch für die Herstellung von Teilen im Kühlkreislauf eingesetzt werden, z.B. Kühlwasserkästen, Thermostatventilgehäuse, Kühlwasserrohre.

Der Gehalt an Glasfaser beträgt im allgemeinen 25-45 Gew.-%, vorzugsweise 30-35 Gew.-% (bezogen auf die Gesamt-Formmasse).

### Beispiele

Folgende Produkte werden in den Beispielen verwendet:
- PA 66 GF 30 =: Durethan AKV 30 HR H 2.0 9005/0 der Bayer AG
- PA 6 GF 30 Strukturviskoses =: Durethan BKV 30 H 2.0 9005/0 der Bayer AG
- PA 6 GF 30 =: Durethan KU 2-2140/30 H 2.0 9005/0 der Bayer AG
- Polyglykol 300 =: Polyethylenglykol 300 z.B. Fa. Hoechst oder Fa. Merck
- Polyglykol 400 =: Polyethylenglykol 400 z.B. Fa. Hoechst oder Fa. Merck
- Ethylenglykol =: Ethandiol

### Beispiel 1 (Vergleich)

Prüfkörper aus Durethan AKV 30 HR H 2.0 9005/0 (Bayer AG) werden in einem Kühlmedium, bestehend aus Ethandiol:Wasser im Gewichtsverhältnis 1:1, in einem Autoklav gelagert.

Der Autoklav wird zur Hälfte mit Kühlmedium (Ethandiol:Wasser im Verhältnis 1:1) als Temperierflüssigkeit gefüllt. In speziellen Stahlbehältern werden die Prüfkörper im Kühlmedium getrennt gelagert. Bei 130°C zeigt das Manometer einen Druck von 2 bar an. Nach 10, 21 und 40 Tagen wird die Heizung ausgeschaltet. Nach einer Kühlzeit von 16 h werden die Prüfkörper entnommen, mit Wasser gewaschen, getrocknet, gewogen und binnen drei Stunden geprüft. Die erhaltenen Resultate sind in Tabelle 1 zusammengestellt.

### Beispiel 2

Prüfkörper aus Durethan AKV 30 HR H 2.0 9005/0 (Bayer AG) werden in einem Kühlmedium, bestehend aus Ethandiol:Polyglykol 300 (1:1), in einem Kolben mit Rückflußkühler gelagert. Der Kolben wird durch ein Ölbad von 137°C beheizt Die Temperatur des Kühlmediums wird konstant bei 130°C gehalten. Nach 10, 21 und 40 Tagen werden die Prüfkörper herausgenommen, in kaltem Kühlmedium gekühlt, mit Wasser gewaschen, getrocknet, gewogen und binnen drei Stunden geprüft. Die erhaltenen Resultate sind in Tabelle 1 zusammengestellt.

### Beispiel 3

Die Versuche in Beispiel 2 werden wiederholt. Die Lagerungsversuche erfolgen bei einer Kühlmediumtemperatur von 150°C. Die erhaltenen Resultate sind in Tabelle 1 zusammengestellt.

### Beispiele 4 und 5

Beispiel 1 wird mit Prüfkörpern aus Durethan KU 2-2140/30 statt AKV 30 HR bei 130 und 120°C wiederholt. Die erhaltenen Resulatate sind in Tabelle 2 zusammengestellt.

### Beispiel 6

Beispiel 2 wird mit Prüfkörpern aus Durethan KU 2-2140/30 H 2.0 und BKV 30 H 2.0 9005/0 statt AKV 30 HR bei 130°C wiederholt. Die erhaltenen Resultate sind in Tabelle 2 zusammengestellt.

**Tabelle 1:**

| Mechanische Eigenschaften von AKV 30 HR H 2.0 9005/0 nach Lagerung in verschiedenen Kühlmedien bei 130°C bzw. 150°C. | | | | | |
|---|---|---|---|---|---|
| Beispiel Nr. | | | 1 (Vergleich) | 2 | 3 |
| Kühlmedium | | Tage (d) | Glykol:Wasser (1:1) | Polyglykol: Glykol (1:1) | Polyglykol:Glykol (1:1) |
| Temp./Druck | °C/bar | | 130/2 | 130/1 | 150/1 |
| Gewichtszunahme | % | 0 d | 11 | 8 | 9 |
| | | 21 d | 11 | 8 | 9 |
| | | 42 d | 11 | 8 | 9 |
| Schlagzähigkeit | kJ/m² | 0 d | 61 | 61 | 61 |
| ISO 180 1C | | 10 d | 57 | 100 | 88 |
| | | 21 d | 54 | 83 | 59 |
| | | 42 d | 17 | 61 | 25 |
| Reißfestigkeit | MPa | 0 d | 181 | 181 | 181 |
| ISO 527 | | 10 d | 75 | 104 | 99 |
| | | 21 d | 66 | 101 | 95 |
| | | 42 d | 32 | 98 | 54 |
| Reißdehnung | % | 0 d | 3,9 | 3,9 | 3,9 |
| ISO 527 | | 10 d | 4,8 | 7,3 | 6,0 |
| | | 21 d | 3,2 | 5,4 | 5,0 |
| | | 42 d | 1,1 | 4,2 | 1,8 |
| Zug-E-Modul | MPa | 0 d | 9330 | 9330 | 9330 |
| DIN 53457-1 | | 10 d | 3790 | 4490 | 4500 |
| | | 21 d | 3870 | 4500 | 4500 |
| | | 42 d | 3670 | 4780 | 4270 |
| Biegefestigkeit | MPa | 0 d | 281 | 281 | 281 |
| ISO 178 | | 10 d | 107 | 145 | 139 |
| | | 21 d | 84 | 147 | 109 |
| | | 42 d | 36 | 136 | 58 |
| Randfaserdehnung | % | 0 d | 4,8 | 4,8 | 4,8 |
| ISO 178 | | 10 d | 5,7 | 7,6 | 7,3 |
| | | 21 d | 3,7 | 7,4 | 4,5 |
| | | 42 d | 1.5 | 5.7 | 2,6 |
| Biege-E-Modul | MPa | 0 d | 8590 | 8590 | 8590 |
| ISO 178 | | 10 d | 3300 | 3980 | 3810 |
| | | 21 d | 3340 | 4000 | 3750 |
| | | 42 d | 3110 | 4120 | 3310 |

**Tabelle 2:**

| Mechanische Eigenschaften von BKV 30 H 2.0 9005/0 und KU 2-140/30 H 2.0 9005/0 nach Lagerung in verschiedenen Kühlmedien bei 120°C bzw. 130°C. | | | | | | |
|---|---|---|---|---|---|---|
| Beispiel | | | 4 | 5 | 6 | 7 |
| Polyamid | | | KU 2-2140/30 | KU 2-2140/30 | KU 2-2140/30 | BKV 30 |
| Kühlmedium | | Tage (d) | Glykol:Wasser (1:1) | Glykol:Wasser (1:1) | Polyglykol:Glykol (1:1) | Polyglykol:Glykol (1:1) |
| Temp./Druck | °C/bar | | 120/1,6 | 130/2 | 130/1 | 130/1 |
| Gewichts- | % | 10 d | 12 | 11 | 10 | 10 |
| zunahme | | 21 d | 11 | 11 | 10 | 10 |
| | | 42 d | 12 | 11 | 10 | 10 |
| Schlagzähig- | kJ/m² | 0 d | 67 | 67 | 67 | 65 |
| keit | | 10 d | 67 | 35 | 80 | 84 |
| ISO 180 IC | | 21 d | 51 | 13 | 67 | 69 |
| | | 42 d | 19 | - | 49 | 50 |
| Reißfestig- | MPa | 0 d | 176 | 176 | 176 | 170 |
| keit | | 10 d | 69 | 52 | 86 | 87 |
| ISO 527 | | 21 d | 66 | 26 | 87 | 84 |
| | | 42 d | 33 | -- | 83 | 80 |
| Reißdehnung | % | 0 d | 3 | 3 | 3 | 3,3 |
| ISO 527 | | 10 d | 5,6 | 3,1 | 6,2 | 7,2 |
| | | 21 d | 4,6 | 0,9 | 5,8 | 6,1 |
| | | 42 d | 1,2 | - | 4,7 | 4,2 |
| Zug-E-Modul | MPa | 0 d | 10710 | 10710 | 10710 | 9580 |
| DIN 53457-1 | | 10 d | 3670 | 3830 | 4190 | 4000 |
| | | 21 d | 3920 | 3670 | 4340 | 4140 |
| | | 42 d | 3790 | -- | 4430 | 4190 |
| Biegefestig- | MPa | 0 d | 262 | 262 | 262 | 260 |
| keit | | 10 d | 97 | 72 | 118 | 123 |
| ISO 178 | | 21 d | 93 | 35 | 115 | 120 |
| | | 42 d | 40 | -- | 90 | 95 |
| Randfaser- | % | 0 d | 4,1 | 4,1 | 4,1 | 4 |
| dehnung | | 10 d | 6,8 | 4 | 7,5 | 7,3 |
| ISO 178 | | 21 d | 5,6 | 1,4 | 6,5 | 6,3 |
| | | 42 d | 1,7 | -- | 4,2 | 4,7 |
| Biege-E- | MPa | 0 d | 8610 | 8610 | 8610 | 8410 |
| Modul | | 10 d | 3180 | 3170 | 3530 | 3630 |
| ISO 178 | | 21 d | 3400 | 3125 | 3590 | 3670 |
| | | 42 d | 3220 | - | 3660 | 3670 |

Aus Beispiel 1 (Vergleichsversuch) in Tabelle 1 ist ersichtlich, daß
1.) der Innendruck im Kühlsystem auf 2 bar ansteigt;
2.) Schlagzähigkeit, Reißfestigkeit und Biegefestigkeit mit der Lagerungsdauer stetig abnehmen;
3.) die Modulwerte während der Sättigung mit Kühlmedium sinken und auf dem erreichten Niveau bleiben;
4.) die Dehnungswerte erst durch Sättigung mit Kühlmedium ansteigen und anschließend in Folge von Oberflächenabbau absinken.
Die Beispiele 2 und 3 zeigen, daß
1.) die Gewichtszunahme bei Lagerung im beanspruchten Kühlmedium sowohl bei 130°C als auch bei 150°C niedriger ist als im Vergleichsversuch (Beispiel 1);
2.) bei Temperaturen bis 150°C kein Druckanstieg erfolgt;
3.) die Eigenschaften nach Lagerung bei 130°C deutlich höher und auch bei 150°C noch merklich höher sind als im Vergleichsversuch.
Aus Tabelle 2 ist ersichtlich, daß
1.) Durethan KU 2-2140/30/strukturviskoses PA 6 GF 30) bei Lagerung im Standard-Kühlmedium nur bis 120°C verwendet werden kann (Druckanstieg auf 1,6 bar);
2.) die Eigenschaften nach Lagerung bei 130°C im beanspruchten Kühlmedium sowohl bei Durethan KU 2-2140/30, als auch im Standard-PA 6 GF 30 (Durethan BKV 30) auf einem deutlich höheren Niveau liegen als im Vergleichsversuch (Beispiel 1 in Tabelle 1).

## Patentansprüche

1. Kühlmedium bestehend aus
A) 35-65 Gew.-% Polyethylenglykol einer mittleren Molmasse zwischen 285 und 420 g/mol,
B) 35-65 Gew.-% Ethylenglykol sowie gegebenenfalls
C) Stabilisatoren.

2. Kühlmedium nach Anspruch 1, dadurch gekennzeichnet, daß das Polyethylenglykol (A) mit der Formel HO-(CH₂-CH₂-O)ₙ-H eine Hydrolysezahl zwischen 271-315 und eine Dichte zwischen 1,12-1,15 g/cm³ besitzt.

3. Kühlmedium nach Anspruch 1, welches Stabilisatoren enthält.

4. Kühlmedium nach Anspruch 1, welches als Stabilisator Metalldesaktivatoren und/oder Phosphite und/oder Antioxidantien, wie sie bei der Stabilisierung von Kühlmedien verwendet werden, enthält.

5. Verwendung des Kühlmediums nach Anspruch 1 im Kühlkreislauf von Kraftfahrzeugen.

6. Verwendung nach Anspruch 5, dadurch gekennzeichnet,
daß der Kühlkreislauf Formteile enthält zu deren Herstellung glasfaserverstärktes PA 6 verwendet wurde.

## Claims

1. Cooling medium containing
A) 35-65 wt.% of polyethylene glycol and
B) 35-65 wt.% of ethylene glycol.

2. Cooling medium according to claim 1, characterized in that the polyethylene glycol (A) with the formula HO-(CH₂-CH₂-O)ₙ-H has an average molar mass between 285 and 420 g/mol, a hydrolysis value between 271-315 and a density between 1.12-1.15 g/cm³.

3. Cooling medium according to claim 1, which contains stabilizers.

4. Cooling medium according to claim 1, which as stabilizers contains metal deactivators and/or phosphites and/or anti-oxidants as they are used in the stabilization of cooling media.

5. Use of the cooling medium according to claim 1 in the cooling system of motor vehicles.

6. Use of glass-fibre-reinforced polyamide 6 for the manufacture of moulded parts which are used in the cooling system.

## Revendications

1. Réfrigérant contenant
A) du polyéthylèneglycol à concurrence de 35 à 65% en poids, et
B) de l'éthylèneglycol à concurrence de 35 à 65% en poids.

2. Réfrigérant selon la revendication 1, caractérisé en ce que le polyéthylèneglycol (A) répondant à la formule HO-(CH₂-CH₂-O)ₙ-H possède une masse molaire moyenne entre 285 et 420 g/mole, un indice d'hydrolyse entre 271 et 315, et une densité entre 1,12 et 1,15 g/cm³.

3. Réfrigérant selon la revendication 1, qui contient des stabilisateurs.

4. Réfrigérant selon la revendication 1, qui contient, à titre de stabilisateur, des désactivateurs métalliques et/ou des phosphites et/ou des antioxydants tels qu'on les utilise lors de la stabilisation de réfrigérants.

5. Utilisation du réfrigérant selon la revendication 1 dans le circuit de refroidissement de véhicules automobiles.

6. Utilisation de polyamide 6 renforcé avec des fibres de verre pour la fabrication d'éléments moulés que l'on met en oeuvre dans le circuit de refroidissement.
